# EUROPÄISCHE PATENTANMELDUNG

(11) **EP 1 134 684 A2**
(43) Veröffentlichungstag der Anmeldung: **19.09.2001**
(21) Anmeldenummer: 01810235.0
(22) Anmeldetag: 07.03.2001
(51) Int. Cl.: G06F 17/60

(54) **Visualisierungssystem**

(30) Priorität: 13.03.2000 CH 477002000
(71) Anmelder: Smart Media Group AG, 3012 Bern (CH)
(72) Erfinder: Gasser, Daniel, 3012 Bern (CH); Weinberg, Frank, 3008 Bern (CH)
(74) Vertreter: Frei, Alexandra Sarah

(57) **Zusammenfassung**

Das vorliegende Verfahren zur Visualierung von Produkten an einem Verkaufspunkt erlaubt einem Anbieter seine Produktprogramme, die er Visualisieren will, offline oder online zusammenzustellen und diese jederzeit zu ändern, löschen oder ergänzen und an einem oder mehreren Verkaufspunkt/en selbsttätig ablaufen zu lassen. Ein solches Produktprogramm kann für eine bestimmte Zeitperiode definiert werden, an welcher das Programm dann täglich ,ausgestrahlt' wird. Ist der Programmzyklus einmal abgelaufen, beginnt er wieder von vorne.

Dies geschieht so, dass Angebotseinheiten, bspw. Server, welche die Visualisierungsinformation organisieren und für die die Visualisierung durchführende Einheiten bereithalten, als Anbieter im Internet über das Internet-Netzwerk als Server mit den Terminals bzw. Clients für die Visualisierung über Channels kommunizieren und diese Terminals als selbsttätig die angebotenen Daten beziehende und verarbeitende Einheiten einem oder mehreren Servern zugeordnet sind.

## Beschreibung

Die Erfindung betrifft ein System zur fernorganisierbaren und fernbedienbaren Visualisierung von Produktwerbung in Schrift, Bild, Ton zur Information der Kunden.

Das System dient dazu, um Kunden über aktuelle Produkte, Preise, Aktionen, aber auch Wetter, Börse, usw. vor Ort zu informieren. Zu diesem Zweck stellt ein Anbieter ein oder mehrere Computer mit Displays (Terminals) oder Projektoren in seinen Räumlichkeiten auf. Über die Displays oder Projektion werden dann die vordefinierten und fernorganisierten Programme (Bilder, Werbefilme, Texte, usw.) ferngesteuert gezeigt.

Jeder Anbieter hat dabei die Möglichkeit, eigene Produktprogramme zusammenzustellen und diese jederzeit zu ändern, löschen oder ergänzen. Ein Produktprogramm kann für eine bestimmte Zeitperiode definiert werden, an welcher das Programm dann täglich 'ausgestrahlt' wird. Ist der Programmzyklus einmal abgelaufen, beginnt er wieder von vorne.

Das System besteht im wesentlichen aus zwei funktionellen Teilen: aus einer Administrationseinheit (in der Regel ein Server) und aus einer bzw. mehreren Terminaleinheit/en (in der Regel sind dies Computer mit 1 oder mehreren Displays, auf welchen die Poduktprogramme gezeigt werden können). Die Datenbahn zwischen Administration und Terminal wird als Channel bezeichnet.

Die Administrationseinheit (es können auch mehrere sein) wird auf einem leistungsstarken Server installiert, der bspw. bei einem Provider steht und vorteilhafterweise auf Internettechnologie beruht. Das heisst, von jedem Client aus (auf dem ein gängiger Browser, bspw. IE 4.01 oder höher installiert ist), können die Channels administriert werden, Bilder, Audios und Videos geladen werden, Benutzer verwaltet werden, und so weiter.

Auf dem Terminal wird vorteilhafterweise eine selbstkonfigurierende Software installiert, die automatisch beim Aufstarten der Maschine aktiviert wird. Dazu werden bspw. die Eingabe von Telefonnummer, Internet-Provider, Passwort und eine Channelnummer benötigt. Die Software versucht nach abgeschlossener Konfiguration sofort eine erste Verbindung zum Server herzustellen. Dabei werden dann alle notwendigen Informationen für den Betrieb geladen. Diese Software kann als Win32 Applikation entwickelt sein. Dadurch ist es natürliche keine reine Internetapplikation. Dies ermöglicht aber, dass viel mehr Media-Formate gelesen und dargestellt werden können, als dies bei reinen Internetapplikationen möglich ist. Nach der Installation soll auf dem Terminalcomputer keine Userinteraktion mehr notwendig sein.

Das Terminal macht nach dem Aufstarten eine Anfrage beim administrierenden Server, ob es bspw. Änderungen im Produktprogramm gegeben hat. Die Anfrage erfolgt in einem vordefinierten Zeitintervall. Das Anfrageintervall kann natürlich jederzeit geändert werden. Der Server prüft die Anfrage und falls Änderungen im Programm gefunden wurden, schickt er das neue Mediamaterial, das sind die Produktillustrationen, an das anfragende Terminal. Das Terminal kopiert dann das Material in die richtigen Verzeichnisse und kann danach sofort damit beginnen, das neue Material, die Bilder der neuen Produkte, auch zu publizieren, das heisst, auf den Monitoren am Verkaufspunkt abzubilden. Bei Filmen müssen, je nach Grösse der Filme und Übertragungsgeschwindigkeit des Modems, zum Teil recht grosse Wartezeiten beim Download des Mediamaterials auf das Terminal in Kauf genommen werden.

Grundsätzlich wird folgendermassen vorgegangen: Ein Kunde hat ein oder mehre passwortgeschützte Channels. Ein Channel hat bspw. noch Subchannels bis zu bspw. 4 Stufen. Auf dem untersten Subchannel können dann die Produktprogramme erfasst werden. Ein Programm hat einen Programminhalt von mehreren Medien für die Produktanpreisung (Bilder, Filme, Text usw.). Dazu wird ein Mediaarchiv aufbereitet. Pro Kunde kann bspw. bei der Administration ein Mediaarchiv oder mehrere geführt werden. Ein Mediaarchiv ist eine Art Depot, wo im Voraus die Medien erfasst werden können, mit welchen man zu arbeiten gedenkt. So muss dann beim Zusammenstellen des Produkteprogramms nur noch eine Verknüpfung auf den oder die vorher erfassten "Artikel" im Archiv hergestellt werden. Man kann dann eine Höchstlimite für Anzahl Bilder oder MB pro Kunde festlegen. Mediaarchive können auch beliebigen Channelbesitzern zur Verfügung gestellt werden. Dies ergibt die Möglichkeit von entsprechenden neuen Dienstleistungen. Solche Dienste können Bilder, HTML Seiten oder Filme an die Channelbesitzer anbieten.

Vorteilhaft ist auch die Erfassung von Daten für statistische Zwecke. So kann man eine statistische Seite vorsehen, wo die momentane Belegung eines jeden Kunden sichtbar ist. Beispiele von angezeigten Feldern sind: Kunde, Kontaktperson, Anzahl Medien, Platzvolumen in MB. Ein Channel kann zwischen ein und einer Mehrzahl von Produktprogrammen aufweisen. Jedes Programm wird bspw. täglich zu einer definierten Zeit abgespielt. (z.B. von 08:00 bis 12:00). Es ist aber auch möglich ein Sonderprogramm zu definieren, das für eine bestimmte Zeit (z. B. 1 Stunde) ab sofort oder über eine Zeiteingabe ,von-bis' das aktuell gezeigte Programm überlagert.

In Zeiten, in denen kein Programm läuft (weil keines definiert wurde) läuft ein Standbild oder Standfilm, welches oder welcher bspw. durch einen dieser oben erwähnten Dienste geliefert wird. Dieses Bild wird bei der Installation des Terminals mitinstalliert und soll später nicht mehr (ohne Userinteraktion) geändert werden. Ein Programm kann durch die Administration mit einer Zeitlimite begrenzt werden. Der Kunde kann dann den zur Verfügung gestellten Zeitraum selber "gestalten". Ein Produktprogramm hat vorzugsweise ein Startdatum und ein Enddatum. Ist das Enddatum leer bedeutet dies dass das Programm bis auf Widerruf läuft. Überschneiden sich zwei Programme so wird immer das jüngere (das aktuellere) angezeigt. Zur besseren Information kann der User via die Administration aufmerksam gemacht werden, wenn sich bei seiner Gestaltung Produktprogamme zeitlich überschneiden.

Durch die Zuordnung der Reihenfolge wird ein Mediaelement aktiv in das Programm übernommen. Die Reihenfolge kann jedoch jederzeit geändert werden. Wird ein Mediaelement erfasst und die Reihenfolge bzw. -position mit einem bestehenden Mediaelemente stimmt überein, so wird das bestehende Mediaelement um eine Position nach unten (z.B. von 3 auf 4) geschoben. Wird eine Position (Reihenfolge) gelöscht, dann wird neu durchnumeriert. Es gibt auch die Möglichkeit, dass das Programm durch Dienste, bspw. einen der vorhandenen Mediadienste ergänzt werden kann. Dies wäre z.B. Wetter, Börse, usw. Dies geschieht dann auch in einer Reihenfolgenanzeige.

Zu den Abspielzeiten: Die Abspielzeit eines jeden Mediaelements kann einzeln definiert werden. Für Filme wird grundsätzlich die Länge gelesen und automatisch errechnet. Die Zeiten werden bspw. in Sekunden (sec) angegeben und als kleinste Einheit gilt damit die Sekunde. Um eine eventuelle Verzögerung bei grossen Bildern vorzubeugen, könnte ein sogenanntes Preload programmiert werden, welches immer das nächste Bild schon vorbereitet.

Die Zuordnung der Mediaelemente kann auf jeder Ebene (je nach Berechtigung) erfolgen. Das heisst auf dem Channel, Subchannel, usw. Wird auf einem obenliegenden Channel ein Mediaelement zugeteilt, wird dies automatisch auf die darunterliegenden Channels vererbt. Die vererbende Zuweisung der Elemente eines Mediaelements kann nur ein Administrator oder SuperUser vornehmen. Andere Benutzer haben keine übergreifende Rechte. Das vererbte Mediamaterial ist durch einen Benutzer mit weniger Rechten (User) nicht löschbar. Der User hat nur das Recht die Reihenfolge zu ändern. Auf der gleichen Seite ist ausserdem eine Preview-Funktion (Vorschau einzelner Bilder im Archiv oder eines ganzen Produktprogrammes) über die Integration der vererbten Mediaelemente, bspw. Bilder mit Texten in den einzelnen Produktprogrammen vorhanden. Diese wird benötigt um die richtige Position und Länge des Textes zu überprüfen.

Es gibt vorteilhafterweise drei hierarchisch geordnete Berechtigungsgruppen: die Administratoren, die Super User und die User.

Administratoren sind Mitarbeiter bspw. der Serverbetreibern oder anderer Supportberechtigten Personen. Administratoren sind zuständig für den Unterhalt des Systems und haben das Recht neue Channels und Subchannels zu eröffnen. Super User sind Channelbesitzer. Das heisst die oberste zuständige Person eines Channels = Channeladministrator. Die Super User sind verantwortlich für die Erfassung Ihrer User und das Definieren derer Rechte. User sind alle Personen, die Berechtigung haben Programme und Subchannels zu bearbeiten.

Bei den Berechtigungen gilt bspw. der Grundsatz der Vererbung. Falls auf einem übergeordneten Channel ein Recht gesetzt wurde, wird dies auch auf die unteren vererbt.

Texte zu Bildern sind frei definierbar und werden bspw. in Arial angezeigt. Es wird vorteilhafterweise nur eine Schriftgrösse definiert. Der Text kann wahlweise in schwarz oder weiss und in drei Zonen (oben, mitte und unten) angezeigt werden. Auf Wunsch kann der Text natürlich auch in wählbaren Farben, wählbarer Schriftgrössen, wählbarer Textausrichtung und 3 Zonen angezeigt werden.

Der Download: Der Computer mit den Mediadaten kann mehrere Terminals beliefern. Pro Terminal kann der SuperUser des Channels die Downloadintervalle festlegen. Die kleinste Einheit beträgt 1 Minute. Und die Sprache: Die Webapplikation kann in Deutsch, Englisch, Französisch, Italienisch, Spanisch bzw. in jeder beliebigen Sprache angeboten werden. Die Auswahl wird auf User Ebene gesteuert. D.h. pro Benutzer kann eine Sprache selektioniert sein. Eine weitere Möglichkeit für ein Download-Management besteht darin, dass für Werbung externer Promoter ein Log-File eingerichtet wird, welches per automatischem Downloadintervall dieses bzw. diese per e-mail dem SuperUser oder einer anderen bestimmten Person gesendet wird bzw. werden. Dieses Log-File dient wie eine Art Quittung für aufgeschaltetes Bild-, Ton- und Filmmaterial pro Zeiteinheit.

Nach dieser eingehenden und anschaulichen Übersicht wird nun die Erfindung mit Hilfe von Figuren im Detail diskutiert.
- Figur 1: zeigt ein Beispiel einer möglichen Datenstruktur zur Administration der Produktprogramme für die Terminals.
- Figur 2: zeigt schematisch den organisatorischen Aufbau der Administrations-einheit, hier den Serverteil, von welchem aus das Mediamaterial arrangiert wird.
- Figur 3: zeigt ein Beispiel für eine Channelseite, wie sie auf dem Bildschirm angezeigt wird.
- Figur 4: zeigt ein Beispiel für die zeitliche Programmierung einer Produktprogrammseite.
- Figur 5: zeigt ein Beispiel für eine Anordnung der Datenfiles auf dem Terminalteil
- Figur 6: zeigt schematisch ein Beispiel für den Ablauf einer Terminalroutine.
- Figur 7: zeigt ein Beispiel, wie ein Programm-Icon plaziert werden kann.

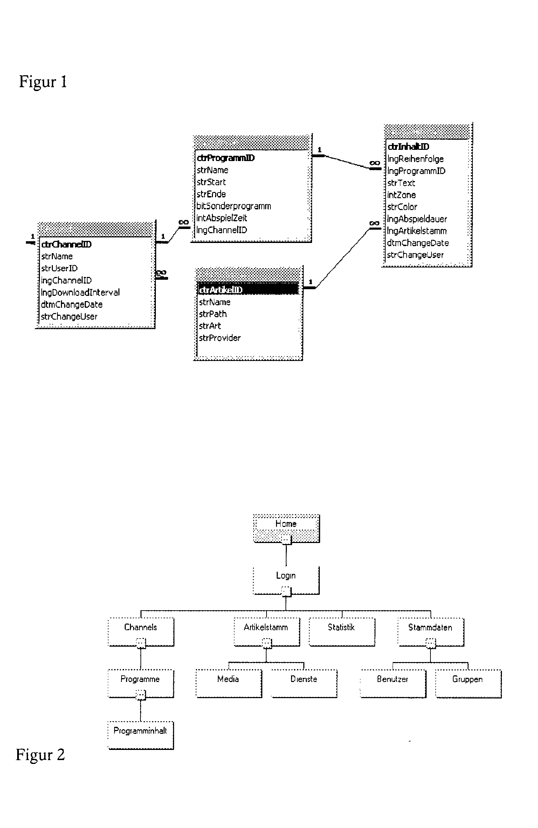

Das Datenmodell dieses Ausführungsbeispieles ist in **Figur 1 gezeigt.** Es umfasst hier 4 Tabellen: Channel; (Produkt)programme; (Produkt)Programminhalt und Artikelstamm. Für den Serverteil - dort läuft die Administration oder Verwaltung aller Daten ab - wird ein Datenbankserver eingesetzt. Beim Datenbankserver handelt es sich in diesem Beispiel um einen SQL Server Version 7.0. Für die Terminals dagegen ist keine Datenbank notwendig. Alle Daten werden in einer Filestruktur abgelegt. Die hier gezeigte Ausführungsform beruht auf einer Datenbankstruktur mit 2 Tabellen für die Benutzerverwaltung, 2 Tabellen für Menüsteuerung und 4 Tabellen für die Channel- und Programmdaten der Datenverwaltung. Dies ergibt ein Datenmodell, wie es teilweise in Figur 1 gezeigt ist. Aus Gründen der Übersichtlichkeit wird nur ein Teil des Datenmodells abgebildet. Es handelt sich dabei um den komplexesten Teil - nämlich die Programm- und Channeltabellen. Diese Tabellen werden unten tabellarisch detailliert aufgeführt.

Die Tabelle **Channel** umfasst bspw. folgende Attribute:

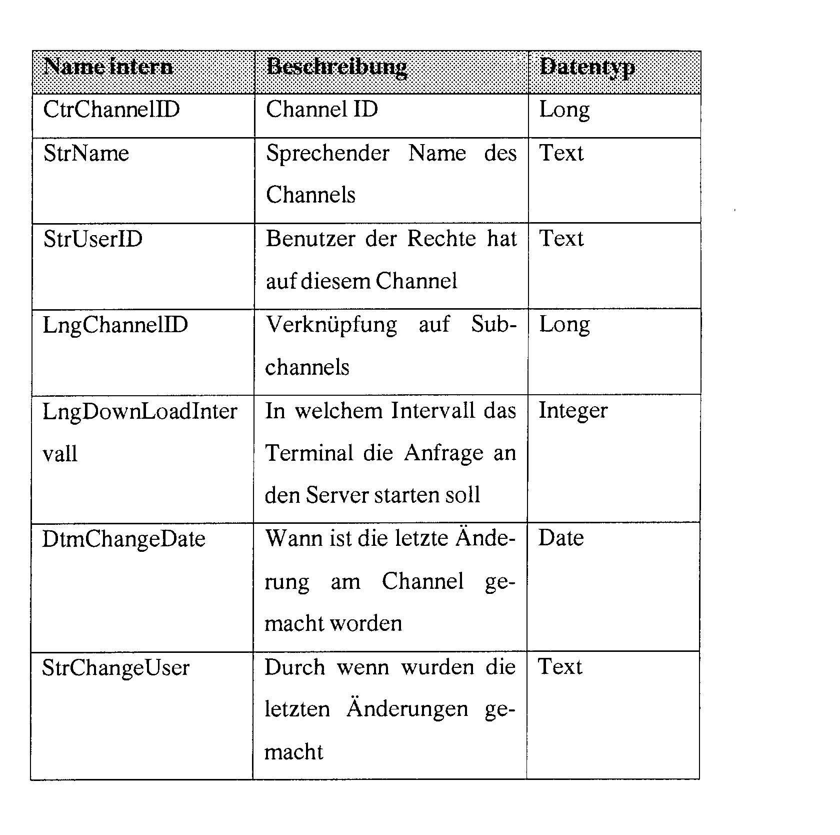

Die Tabelle (Produkt)**Programme** umfasst bspw. folgende Attribute:

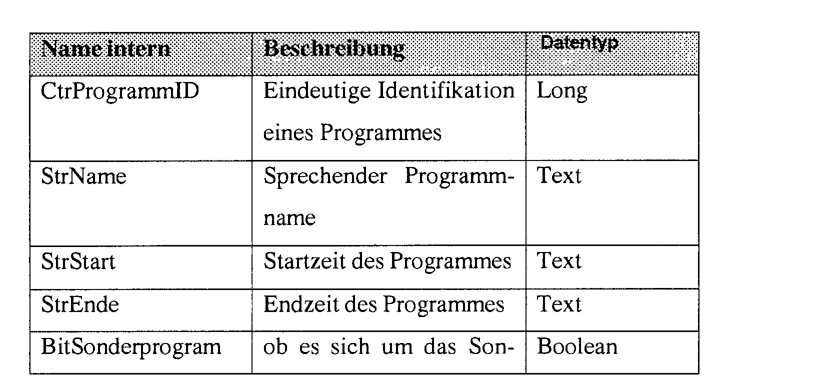

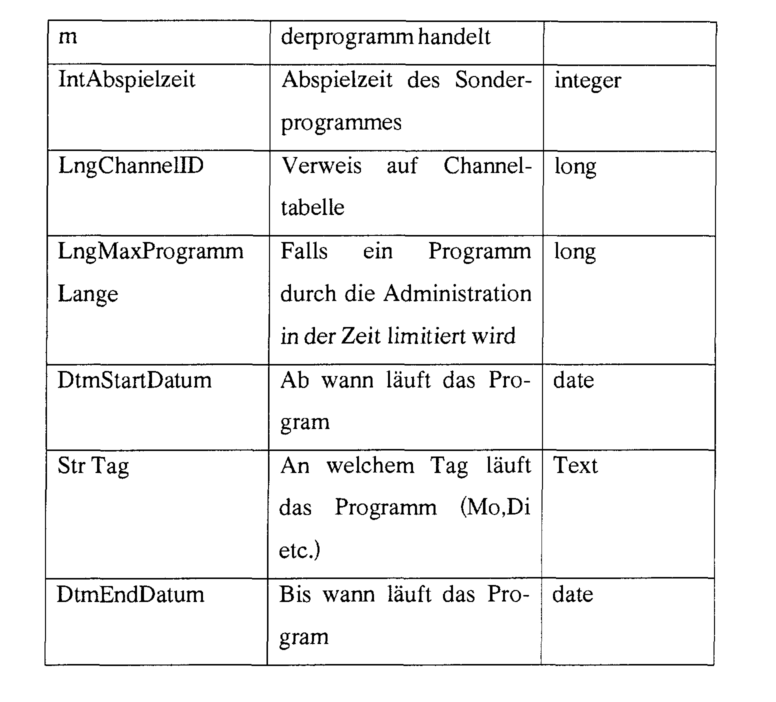

Die Tabelle (Produkt) **ProgrammInhalt** umfasst bspw. folgende Attribute:

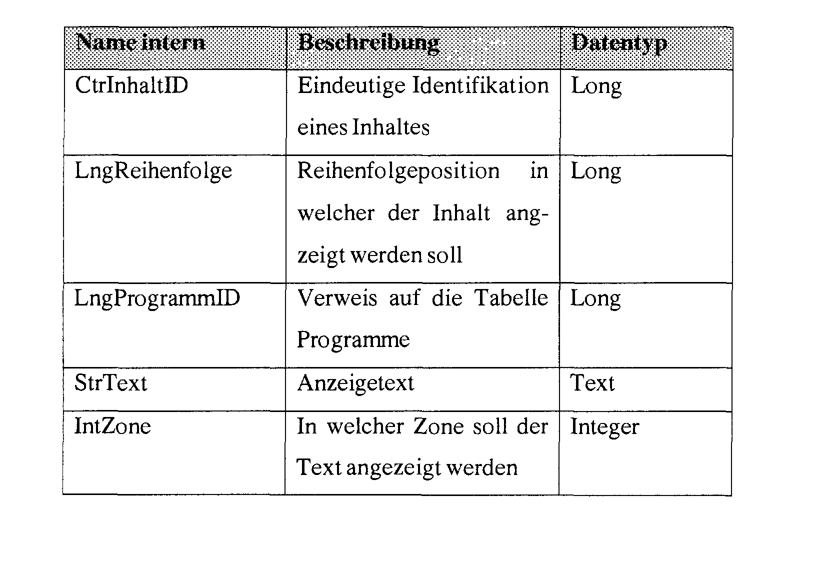

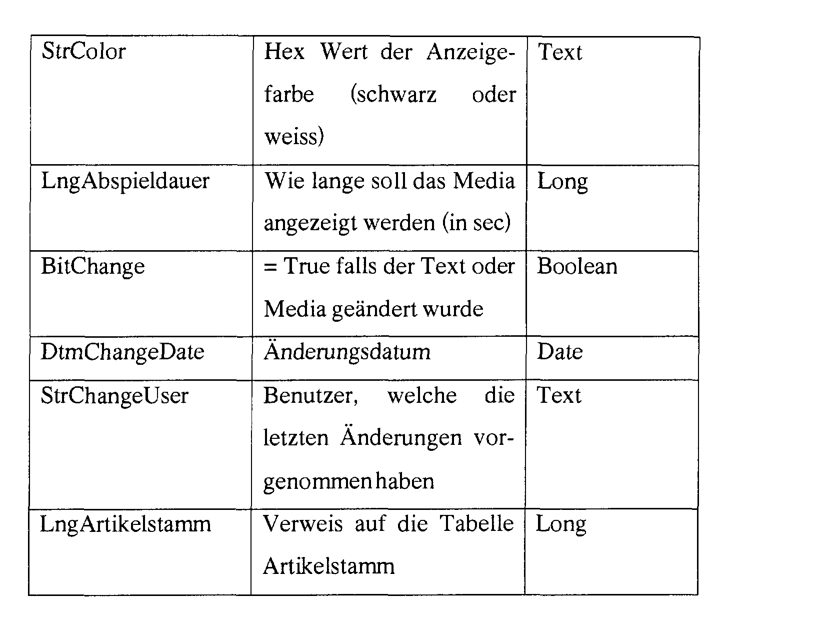

Die Tabelle Artikelstamm umfasst bspw. folgende Attribute:

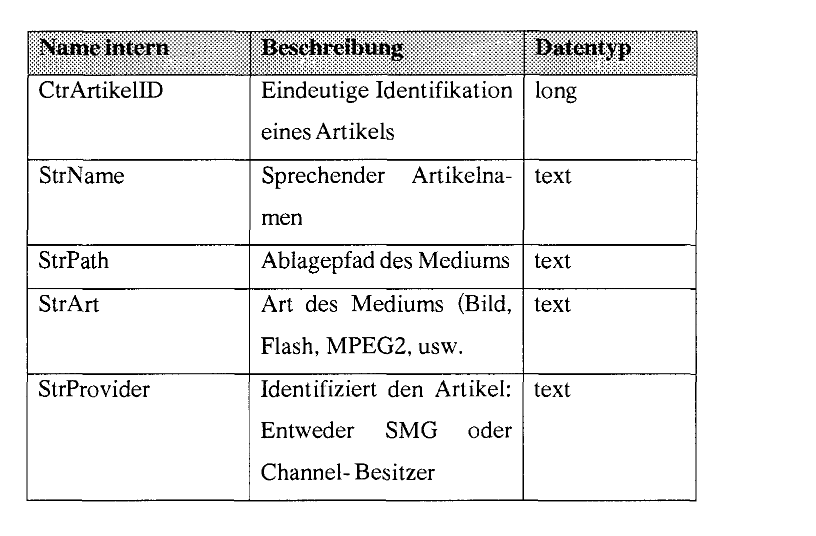

Für den Serverteil (Webteil) sind Weboutlets vorgesehen. Das Weboutlet beinhaltet den hierarchischen Aufbau und gibt Aufschluss über die Navigation einer Weblösung. Gemäss **Figur 2** ist als Beispiel folgender Aufbau gezeigt:
1. Login: Ein Benutzer meldet sich mittels UserIdentifikation (UID) und Password (PWD) am System an. Erkennt das System den Benutzer, wird der Zutritt, anhand der Gruppenzugehörigkeit, zum System erteilt.
2. Stammdaten: Dort werden alle Stammdaten verwaltet - Benutzer, Gruppen, Menüsteuerung, usw. Zutritt hat dort nur, wer in der Administratorengruppe erfasst wurde.
3. Artikelstamm mit Media und Dienste: Die Seite Dienste ist nur der Administration der Dienste zugänglich. Die Seite Media wird durch den Administrator wie auch durch den SuperUser bedient.
4. Media: Ist das Artikeldepot, wo alle Medien (einzelnen Produkten zugeordnete Bilder, Texte, Filme, Sounds etc.) abgespeichert werden. Jeder SuperUser eines Channels hat ein eigenes Depot.
5. Statistik: Diese Seiten dienen der Auswertung. Beispielsweise eine Statistik über den Platzbedarf der einzelnen Betreiber/Channelbesitzer.
6. Channel: Übersicht über die Channels und Subchannels. Nur ein Administrator kann Channels und Subchannels eröffnen, löschen oder sperren. Ein SuperUser kann die Channels editieren. User haben keine Rechte auf Channelebene. Auf der Channelseite kann auch definiert werden in welchem Zeitintervall der Client eine Update Anfrage beim Server starten soll.
7. Programme: Hier werden die Produktprogramme definiert. Ein SuperUser hat die Möglichkeit zwischen 1 und N Programmen zu definieren. Ausserdem steht ihm ein Sonderprogramm zur Verfügung, welches für eine bestimmte Zeitdauer eingespielt wird. Ein User hat auf seinem Subchannel das Recht Programme zu erstellen, zu editieren, zu löschen und anzuschauen =» Programminhaltseite.
8. Inhalt: Hier werden die Produktprogramme zusammengestellt. Das heisst, es werden Medias aus dem Artikelstamm übernommen und diese der gewünschten Reihenfolge im Programm plaziert. Es wird die Einspielzeit eines Programmes definiert. Es kann auch ein Dienst übernommen werden und an einem bestimmten Ort im Programm plaziert werden.

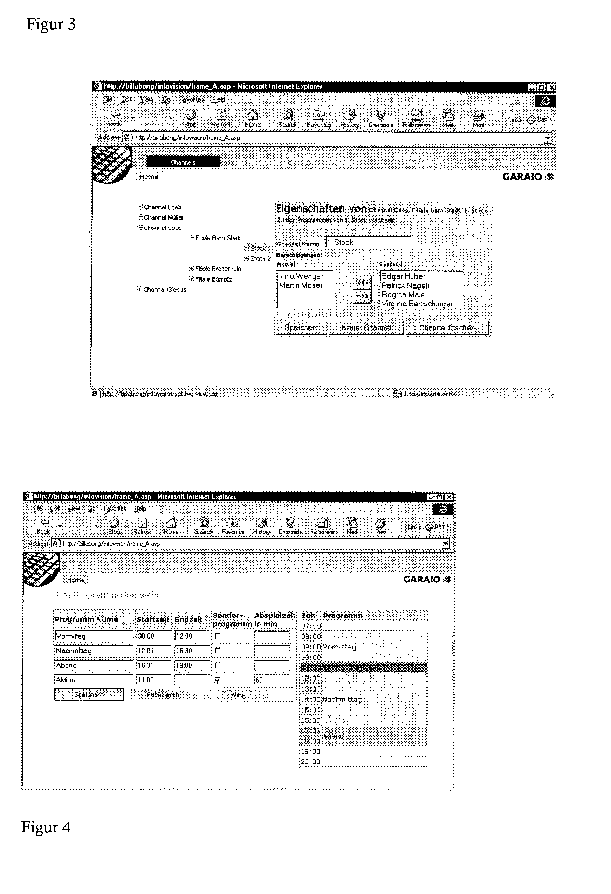

Die Channels können durch Administratoren und den jeweiligen SuperUser editiert werden. Die Channelseite kann, wie **Figur 3** als Beispiel zeigt, aus zwei Hälften bestehen. Auf der linken Seite werden die Channels und Subchannels in Baumform (Tree) dargestellt. Der Administrator kann durch den ganzen Baum navigieren, Subchannels öffnen und dann auf die dazugehörenden Produktprogramme zugreifen. Ein SuperUser hat nur das Recht durch seinen Channel mit den Subchannels zu navigieren. Ein User hat keinen Baum und kann nur Programme in seinem Subchannel erstellen, editieren und löschen. Auf der rechten Seite werden die jeweiligen Eigenschaften des Channels dargestellt. Es können Namen geändert werden. Berechtigungen zugeordnet werden und auch neue Channels erfasst werden. Von hier aus kann auch auf die Programmseite zum aktuellen Channel gewechselt werden. Aus dieser Ansicht kann dann in die Programmübersicht gewechselt werden. Dort werden dann die Programme erfasst, gelöscht, editiert und publiziert.

Die Bildschirmseite der Produktprogramme: Auf dieser Seite werden alle Programme zu einem Subchannel aufgelistet. Es ist dann möglich die Eigenschaften (Namen, Abspielzeiten, usw.) zu ändern. Die Administratoren, SuperUser und User haben ausserdem die Möglichkeit, neue Programme zu erfassen und Programme zu löschen.

Eine solche Programmseite könnte bspw. aussehen, wie **Figur 4** gezeigt. Auf der linken Seite werden die Produktprogramme erfasst und bearbeitet - auf der rechten Seite ist eine grafische Darstellung über den zeitlichen Ablauf der Programme abgebildet.

Bevor die Daten vom Terminal übernommen werden können, müssen diese aufbereitet und verpackt werden. Dies kann ein sogenannter der Publishing Service (eine Subroutine) erledigen. Damit dieser Service weiss wann er wieder neue Daten erhalten hat und diese aufbereiten soll, wird er über den Knopf "Publizieren" gestartet. Es wäre denkbar, dass statt auf Userinteraktion (Klick auf Publishingknopf) immer beim Abspeichern der Änderung, auch der Publishing-Service gestartet wird. Dies hätte aber zur Folge, dass der Benutzer immer wieder über längere Zeit blockiert wäre. Daher ist es vorteilhafter, wenn der Benutzer zuerst alle Änderungen anbringt und danach das Programm neu publiziert. Es wäre auch denkbar, dass ein asynchroner Prozess die Datenbank nach publizierbaren Einträgen durchsucht. Dies würde den Publisher-Button einsparen. Eine Kombination dieser Möglichkeiten ist nicht auszuschliessen. Durch Klick auf ein Programm wird der Inhalt des Programms geladen und auf der rechten Seite angezeigt.

Auf der Produktprogramm-Inhaltseite werden dann die Programme zusammengestellt. Das heisst, die Bilder, Videos, Sounds etc. geladen, Texte definiert, Reihenfolgen bestimmt, und der Service abonniert. Dies kann von Administratoren, SuperUser und User mit entsprechenden Rechten vorgenommen werden. Für den Administrator steht hier eine zusätzliche Funktion zur Verfügung, wo er ein bestimmtes Media mehreren Subchannels zuordnen kann. Auch der SuperUser kann von dieser Funktion Gebrauch machen, dies natürlich nur auf seinem eigenen Channel. Das Media wird dann auf alle untergeordneten Programme kopiert. Ein Benutzer (User) kann das ihm zugeordnete Material nicht löschen, wohl aber die Reihenfolge und Abspieldauerverändern.

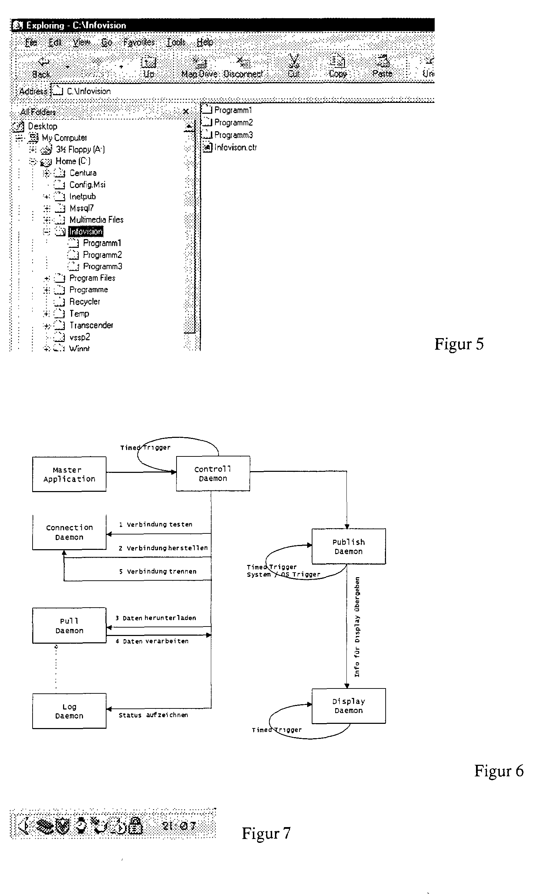

Der Terminalteil, das ist die andere Seite, die beim Kunden am POS (point of sale) installiert ist, besteht bspw. aus einem VB (Visual Basic) Programm mit integriertem Browser (Internet Explorer). Diese Applikation übernimmt die Steuerung der Applikation. Obwohl nur Knecht, ist sie verantwortlich, dass die richtigen Services zum richtigen Zeitpunkt gestartet werden und die richtigen Befehle ausführen. Die notwendigen Informationen holt die Applikation aus den Steuerungs- oder Informationsfiles. Die Daten und Scripts des Terminalteils werden in einer, wie in **Figur 5** beispielsweise gezeigten fixen Struktur abgelegt: Im Root Folder (Infovision befindet sich das Steuerungsscript (Infovision.ctr) und alle möglichen Programme. In jedem Programm Folder ist dann wieder ein Script das Inhalt Script (Programm1.ctr).

Auf dem Terminalcomputer ist die Masterapplikation im SystemTray, dem Bereich in der Windows Leiste rechts, als Icon zu finden, siehe **Figur 7**. Über dieses Icon könnte im Problem- oder Administrationsfall die Applikation mit Benutzerinteraktion gesteuert werden. Ein "normales" Interface ist nicht vorgesehen, da die Applikation ja vor allem mittels Steuerdateien gesteuert wird.

Die Software ist auf jedem Terminalrechner in folgende Teile unterteilt, nämlich, in Applikation, Steuerung und Display

Den schematischen Ablauf einer bzw. der Terminalroutine zeigt **Figur 6.** Die Master Applikation ist lediglich für die Standard Windows Applikationsfunktionen zuständig. Die weitere Funktionalität wird in asynchronen Prozessen durch zwei "Daemons" sichergestellt. Ein "Daemon" führt eine Utility-Funktion zur Verwaltung oder Koordinierung aus, die nicht vom Benutzer aufgerufen wird. Dieses Programm läuft im Hintergrund ab und wird nur bei Bedarf aktiviert.

Die Verbindung im obigen Diagramm zwischen der Applikation, dem "Control Daemon" und dem "Publish Daemon" sind eigentlich nur dazu da, um zu zeigen, dass diese Untersysteme gegenseitig Zugriff auf ihre Funktionen und Entitäten haben. Es passiert aber kein strukturierter Programmablauf zwischen diesen in sich abgeschlossenen Systemen.

Der "Control Daemon" aktiviert sich selber in den in den Einstellungen definierten Zeitabständen. Danach prüft er, ob eine Verbindung zum Server besteht (1). Besteht keine solche Verbindung, so wird eine solche mittels RAS (Remote Access Service) erstellt. Diese Aufgabe übernimmt der "Connection Daemon" (2).

Nachdem eine Leitung besteht, lädt der "Pull Daemon" die eine erste Datei mittels HTTP Protokoll vom Webserver herunter (3). Der "Control Daemon" analysiert diese Datei anschliessend (4). Der "Control Daemon" führt anschliessend die aufgelisteten Befehle durch, das heisst, wenn Medien oder andere Dateien heruntergeladen werden müssen, so erhält der "Pull Daemon" für jede Datei seinen Befehl. Müssen nur noch administrative Arbeiten ausgeführt werden, so wird die Verbindung (wenn vorher aufgebaut) wieder unterbrochen (5) und anschliessend die administrativen Arbeiten ausgeführt. (Wenn auf dem Terminalcomputer anormale Zustände auftreten, könnte ebenfalls ein Rapportieren an den Server Sinn machen. Ein "Log Daemon" sollte von Anfang an vorgesehen werden. Die Daten werden nun anschliessend so aufgearbeitet, dass sie für den "Publish Daemon" zur Verfügung stehen.

Unabhängig von diesem Prozess arbeiten der "Publish Daemon" und der "Display Daemon" ständig miteinander. Der "Display Daemon" wechselt in den in den Programmen definierten Zeitabständen die Medias aus und stellt diese in den dafür vorgesehenen Containern dar. Welches Programm dargestellt werden soll wird ihm dabei bei jedem Programmwechsel durch den "Publish Daemon" mitgeteilt.

Der "Publish Daemon" merkt jedesmal, wenn bei Screen-On in der Dateistruktur mit den Dateien etwas passiert. Mit andern Worten, wenn sich ein Programmfile ändert, verschwindet oder neu hinzukommt, so liest der "Publish Daemon" die neuen Daten aus dem Steuerfile in den Speicher und handelt je nach den enthaltenen Anweisungen selbständig. Dieses Vorgehen, die praktisch vollständige ,Daemonisierung' des Terminalprozesses - und nicht nur die Benachrichtigung durch den "Control Daemon" - lässt einen weiteren Ausbau offen.

Diese Architektur wird in einer Mischung von COM Bibliothek und Windows Applikation aufgebaut. Während die "Master Application" eine normale in VB erstellte Applikation darstellt, werden die Daemons als COM Bibliotheken abgebildet. Mittels diesem Vorgehen ist die Zusammenarbeit der verschiedenen Daemons gewährleistet und birgt keine versteckten Überraschungen in der Entwicklung. Die Datenstrukturen werden intern in der COM Bibliothek in Form von Klassen abgebildet. Dadurch sollte einem möglichen späteren Ausbau der Datenstruktur nichts im Wege stehen und den Ausbau vereinfachen.

Die Steuerungsscripts beinhalten folgendes: Das versteckte File beinhaltet Informationen, die normalerweise nicht geändert werden müssen. Dies sind folgende (Liste nicht abschliessend): Name DialUpNetwork/RAS Verbindung, UID von Provider, Telefonnummer von Provider, Passwort von Provider, Downloadintervalle, Standardpfade, Dateiablage auf Server, und so weiter. Dieses File beinhaltet alle Steuerungsinformationen der Programme die auf dieser Maschine laufen sollen: Aktive Programme und wo sie liegen (Pfade), Abspielzeiten der Programme, et cetera. Im jeden Programm Ordner liegt dann ein Display-Steuerungs-Datei. Diese enthält alle Informationen über den Inhalt eines Programmes: Anzeigezeit eines Bildes, Text eines Bildes, Reihenfolge der Media, und so weiter.

## Patentansprüche

1. System zur Visualisierung von Information, insbesondere Produktinformation an ausgewählten Orten durch Organisation und Steuerung des Visualisierungsinhalts von beliebigen Orten welche nicht die Visualisierungsorte sind, **gekennzeichnet durch** eine oder mehrere die Administration der Visualisierungsinformation organisierende und bereithaltende Administrations-Einheit/en, welche durch mindestens einen, vorzugsweise eine Mehrzahl von die Visualisierung selbsttätig durchführende Visualisierungs-Einheiten selbsttätig angesteuert werden, um die bereitgehaltene Produktinformation für die Visualisierung abzuholen und selbsttätig abzuspielen.

2. System nach Anspruch 1, **dadurch gekennzeichnet, dass** die Administrations-Einheiten, welche die Visualisierungsinformation organisieren und für die die Visualisierung durchführende Visualisierungs-Einheiten bereithalten, als Anbieter im Internet über das Internet-Netzwerk oder mit Intranet und dessen Netzwerk als Server mit den Terminals bzw. Clients für die Visualisierung über Channels kommunizieren und diese Terminals als selbsttätig die angebotenen Daten beziehende und verarbeitende Einheiten einem oder mehreren Servern zugeordnet sind.

3. System nach einem der Ansprüche 1 oder 2, **dadurch gekennzeichnet, dass** die Server Dienstleistungsanbieter-Server sind und dass die Terminals bzw. Clients computergestützte Visualisierungseinrichtungen an Verkaufsstellen bzw. ,point of sales' sind und diese über Channels Daten austauschen.

4. Verfahren zur Organisation der Administration der die Visualisierungsinformation organisierenden und bereithaltenden Einheiten nach einem der Ansprüche 1 bis 3, **dadurch gekennzeichnet, dass** die Administration der Visualisierungsinformation in Form eines festen Datenmodells mittels verbundener Tabellen organisiert und für den Abruf bereitgehalten werden.

5. Verfahren nach Anspruch 4, **dadurch gekennzeichnet, dass** das Datenmodell mindestens die Tabellen zur Definition der Channels, zur Definition des Produktprogramms, zur Definition des Produktprogramminhalts und zur Definition des Artikelstamms enthalten.

6. Verfahren nach einem der Ansprüche 1 bis 5, **dadurch gekennzeichnet, dass** der/die Server über ein Weboutlet mit einem hierarchischen Aufbau so organisiert ist/sind, dass für die selbsttätig anfragenden Terminals je nach Berechtigung die für sie bereitgehaltenen Daten zum Herunterladen freigegeben werden.

7. Verfahren zum selbsttätigen Ablauf eines Terminals nach einem der Ansprüche 1 bis 3, **dadurch gekennzeichnet, dass** der selbsttätige Ablauf der Anfrage und Abarbeitung über Daemons in einem Programm-File (COM-File) Verbund derart realisiert wird, dass einzelne Daemons gegenseitig zu einem Super-Daemon verbunden werden.

8. Verfahren nach Anspruch 7, **gekennzeichnet durch,** einen Programmverbund von Daemons in Form von Programm-Files (bspw. COM-Files) derart, dass ein von einer Masterapplikation beschickter Control-Daemon einerseits einen Publish-Daemon, welcher seinerseits einen Display-Daemon und andererseits einen Connection-Daemon, und einen Pull-Daemon ansteuert, wobei der Control-Daemon, der Publish-Daemon und der Display-Daemon eine zeitabhängige Selbststartfunktion aufweisen.

9. Verfahren nach Anspruch 7 oder 8, **dadurch gekennzeichnet, dass** eine Control-Funktion bzw. -Daemon mit einer Publish-Funktion bzw. -Daemon zusammen eine Superfunktion bzw. Super-Daemon bilden, mit Hilfe welcher/welchem die Terminalfunktion selbsttätig abläuft.

10. Einrichtung zur Realisierung des Systems nach Anspruch 1, **bestehend aus: mindestens** einem Server für die die Administration der Visualisierungsinformation organisierende und bereithaltenden Administrations-Einheiten und mindestens einem Terminal für die die Visualisierung selbsttätig durchführende Visualisierungs-Einheiten, wobei das Terminal den Server selbsttätig ansteuern kann, um die bereitgehaltene Produktinformation für die Visualisierung abzuholen und selbsttätig abzuspielen.

11. Vorrichtung zur Durchführung des Verfahrens zur selbsttätigen Verarbeitung von Visualisierungsinformation an einem Verkaufspunkt, **gekennzeichnet durch,** einen Terminalrechner, mit einem oder mehreren Visualisierungsvorrichtung/en, welcher Terminalrechner ein Programm aufweist mit dem der selbsttätige Ablauf der Anfrage und Abarbeitung über Daemons in einem COM-File Verbund derart realisiert wird, dass einzelne Daemons gegenseitig zu einem Super-Daemon verbunden werden.

12. Vorrichtung nach Anspruch 11, **dadurch gekennzeichnet, dass** der Terminalrechner ein Programm mit einem Programmverbund von Daemons in Form von Programm-Files (bspw. COM-Files) derart, dass ein von einer Masterapplikation beschickter Control-Daemon einerseits einen Publish-Daemon, welcher seinerseits einen Display-Daemon und andererseits einen Connection-Daemon, und einen Pull-Daemon ansteuert, wobei der Control-Daemon, der Publish-Daemon und der Display-Daemon eine zeitabhängige Selbststartfunktionaufweisen.

13. Datenträger enthaltend Programme zur Durchführung des Verfahrens nach einem der Patentansprüche 4 bis 9.

14. Datenträger nach Anspruch 13 enthaltend einen installationsbereiten Satz für die Administrations-Einheit und/oder die Visualisierungs-Einheit zur Verwendung nach einem der Ansprüche 1-12.
